# FASCICULE DE BREVET EUROPEEN

(11) **EP 2 758 280 B1**
(45) Date de publication et mention de la délivrance du brevet: **29.06.2016**
(21) Numéro de dépôt: 12766620.4
(22) Date de dépôt: 17.09.2012
(51) Int. Cl.: B60R 13/04, B29C 65/16, B60R 19/20, B60R 19/42

(54) **PANNEAU DE PROTECTION DESTINE A ETRE FIXE SUR UNE PARTIE DE LA CARROSSERIE D'UN VEHICULE AUTOMOBILE ET VEHICULE EQUIPE D'UN TEL PANNEAU**
SCHUTZPLATTE ZUR BEFESTIGUNG AN EINEM TEIL EINES FAHRZEUGAUFBAUS UND FAHRZEUG MIT EINER SOLCHEN PLATTE
PROTECTIVE PANEL TO BE ATTACHED ONTO A PORTION OF THE BODY OF A MOTOR VEHICLE, AND VEHICLE PROVIDED WITH SUCH A PANEL

(30) Priorité: 23.09.2011 FR 1158516; 23.09.2011 FR 1158511
(43) Date de publication de la demande: 30.07.2014
(73) Titulaire: Peugeot Citroën Automobiles SA, 78140 Vélizy Villacoublay (FR); Rehau SA, 57340 Morhange (FR)
(72) Inventeur: PENNERATH, Eddy, F-57450 Henriville (FR); FINOT, Emmanuel, F-92360 Meudon La Foret (FR); COLIN, Sebastien, F-57915 Woustviller (FR); AZOULAY, Laurent, F-92140 Clamart (FR); DEYDIER, Dimitri, F-92160 Antony (FR); CARFANTAN, Maurice, F-92140 Clamart (FR); MISSIROLI, Matteo, F-75003 Paris (FR)
(74) Mandataire: Fosse, Danièle
(86) Numéro de dépôt international: PCT/EP2012/068253
(87) Numéro de publication internationale: WO 2013/041489

(56) Documents cités:
- EP-A1- 2 560 839
- EP-A2- 1 362 744
- WO-A1-01/54888
- WO-A1-2011/131877
- GB-A- 256 144
- GB-A- 2 257 391
- US-A- 4 072 334

## Description

La présente invention concerne un panneau de protection destiné à être fixé sur une partie de la carrosserie d'un véhicule. L'invention concerne également un véhicule automobile équipé d'un ou plusieurs panneaux de protection.

Les portes latérales des véhicules automobiles sont souvent équipées de baguettes de protection qui sont censées protéger ces portes à l'égard de petits chocs urbains, tels que les chocs de portes latérales et de caddies. Du fait de leur faible largeur, ces baguettes ont une fonction de protection qui est très réduite.

Certains véhicules sont équipés de bandeaux latéraux présentant une grande largeur. Ces bandeaux sont en matière plastique rigide et ne présentent pas la capacité de se déformer sous l'effet d'un petit choc urbain. De ce fait, l'énergie d'impact en cas de choc d'un chariot de supermarché ou d'un choc poteau est transmise intégralement à la portière. Ce bandeaux présentent tout au plus l'avantage qu'en cas d'éraflures, ils évitent d'avoir à repeindre la totalité d'une porte ou d'une aile du véhicule.

Le brevet US 4 411 938 décrit un panneau de protection en matière plastique souple qui est collé sur la carrosserie d'un véhicule automobile. La protection conférée par un tel panneau souple est réduite étant donné que le panneau est en contact avec la carrosserie et de ce fait n'évite pas la déformation de celle-ci en cas de choc un peu violent.

On a proposé de réaliser un panneau de protection en matière plastique destiné à être fixé sur une partie de la carrosserie d'un véhicule automobile, comprenant une paroi en matière plastique rigide et une paroi en matière plastique souple, ces deux parois étant en contact l'une avec l'autre dans des zones qui entourent des zones dans lesquelles ces deux parois sont espacées l'une de l'autre, et définissent entre elles des alvéoles qui sont remplies d'air.

Ainsi, les zones dans lesquelles la paroi en matière plastique souple est espacée de la paroi en matière plastique rigide et remplies d'air sont déformables en cas de choc de type urbain. Lors d'un tel choc, la paroi souple se rapproche de la paroi rigide, sans être endommagée, ni même éraflée. Un tel panneau présente donc une capacité de protection plus intéressante.

Le document US 4 072 334 décrit un panneau de protection selon le préambule de la revendication 1.

La présente invention a pour but de proposer un panneau de protection de ce type présentant des performances de protection encore améliorées.

A cet effet, l'invention a pour objet un panneau de protection présentant les caractéristiques de la revendication 1.

Ainsi de manière avantageuse, la constitution de ces zones emplies d'air de manière étanche permet, lors d'un choc, à la paroi souple de se déformer et de se rapprocher de la paroi rigide, sans être endommagée, ni même éraflée tout en reprenant sa forme du fait de la liaison étanche définissant le volume empli d'air.

Cet air emprisonné dans la zone par la liaison étanche joue donc un rôle d'amortisseur. La zone définie par la liaison étanche et remplie d'air forme une cellule. Sous l'effet d'un impact, la pression d'air augmente progressivement au sein de cette cellule et la matière souple se déforme ce qui permet d'absorber l'énergie d'un impact de choc. La liaison étanche permet d'obtenir une résistance qui croît avec la déformation, de sorte qu'en cas de faible déformation, cela procure une sensation de souplesse et en cas de déformation plus forte une résistance plus importante. On absorbe ainsi l'énergie lors de l'impact tout en donnant une sensation de souplesse et de fermeté lors du toucher du panneau par un utilisateur.

La liaison étanche constituée d'un cordon de collage ou de soudage ménagé entre la paroi rigide et la paroi souple définit la périphérie de la cellule et sa forme. Cette cellule peut avantageusement être en forme d'alvéole, de bulle de section circulaire ou de toute autre forme appropriée.

De manière à favoriser encore plus une telle capacité de protection, notamment lors de variations de température, selon l'invention, un évent est ménagé dans la paroi rigide au niveau de chaque cellule, cet évent étant dimensionné pour ne pas laisser s'échapper de l'air en cas de choc ou d'effort rapide sur la cellule tout en permettant un échappement et une entrée d'air lors de variation de pression interne dans la cellule sous l'effet de variations thermiques.

Ainsi avantageusement, l'évent ménagé dans la paroi rigide permet de réguler la montée en pression de l'air au sein de la cellule sous l'effet d'une augmentation de la température, lorsque le véhicule reste au soleil et lors d'une baisse notamment liée au froid.

Lors d'une élévation de température, une surpression survient au sein de cette cellule et entraîne un très fort risque de rupture de l'étanchéité de la liaison entre les parois rigide et souple. De ce fait, la présence de l'évent permet à l'air de s'échapper pour maintenir une pression adaptée dans la cellule.

Mais de plus, lors de la baisse de température, on évite également une dépression dans la cellule pouvant conduire à une déformation de cette cellule. La dépression pouvant intervenir au sein de la cellule est alors compensée par l'entrée d'air par l'évent.

Selon une forme de réalisation préférée, l'évent est ménagé dans la partie d'une cellule correspondant à la partie inférieure de ladite cellule une fois le panneau monté, de sorte qu'on évite ainsi tout risque d'entrée d'eau à l'intérieur de ces zones remplies d'air, par exemple par ruissellement. Les zones dans lesquelles sont définies les cellules sous forme de bulles ou d'alvéoles peuvent être réparties sur le panneau de protection de façon à former un motif esthétique.

Dans une version préférée de l'invention, les cellules correspondant aux zones dans lesquelles les deux parois sont espacées l'une de l'autre et remplies d'air, occupent une surface plus importante que les zones dans lesquelles les deux parois sont en contact l'une avec l'autre. Ainsi, une partie prépondérante de la surface du panneau est déformable en cas de choc, ce qui lui confère une capacité optimale de protection.

La paroi en matière plastique rigide comporte sur l'une de ses faces des moyens de fixation pour fixer celle-ci à ladite partie de la carrosserie et la paroi en matière souple recouvre l'autre face de la paroi en matière rigide. Dans les zones dans lesquelles les deux parois sont en contact l'une avec l'autre, ces deux parois sont soudées ou collées l'une à l'autre. De préférence également, à la périphérie du panneau, la paroi en matière plastique souple est soudée ou collée à la paroi en matière plastique rigide.

Dans un mode de réalisation avantageux de l'invention, le bord périphérique de la paroi en matière plastique souple déborde par rapport au bord périphérique de la paroi en matière plastique rigide pour constituer une lèvre souple destinée à venir en appui sur ladite partie de la carrosserie du véhicule. De manière avantageuse, une telle lèvre périphérique permet un appui du panneau sur la porte. Les moyens de fixation du panneau exerçant une traction du panneau vers la porte tandis que la lèvre repousse le panneau vers l'extérieur. Cette disposition permet d'obtenir une liaison étanche entre le panneau selon l'invention et la carrosserie, étanchéité à l'eau, mais également à la poussière et au bruit.

Par ailleurs, la lèvre périphérique permet également une absorption d'énergie en cas de claquement de porte. En effet, la lèvre se déformant élastiquement, el empêche tout bruit entre panneau et tôle lors d'un claquement de porte.

De plus, la lèvre périphérique présente une précontrainte, ce qui permet d'absorber tous les intervalles de tolérances (embouti de porte, tolérances du panneau support, des moyens de fixation, etc.,... ) tandis que la déformabilité de la lèvre permet une déformation élastique souple qui facilite le montage par encliquetage sur la porte et que la fixation élastique du panneau sur la porte, empêche tout bruit de vibration en roulage.

La lèvre souple permet aussi de faciliter la fixation du panneau par encliquetage. A cause de ses dimensions, le panneau comporte un nombre important de moyens de fixation par encliquetage. Pour qu'un moyen d'encliquetage pénètre dans le trou de tôle et pour qu'il s'ouvre derrière la tôle, il faut que le monteur pousse le panneau légèrement au-delà de sa position théorique. La lèvre souple permet de pousser le panneau au-delà de cette position, sans exercer trop d'effort, puis de le faire revenir à sa position d'équilibre. Un appui rigide, par exemple du support sur la tôle, entraînerait un effort d'encliquetage beaucoup plus élevé.

Dans une version préférée de l'invention, dans les zones dans lesquelles les deux parois sont espacées et remplies d'air, la paroi en matière plastique souple présente une surface convexe dirigée vers l'extérieur. Cette surface convexe permet d'obtenir une protection particulièrement efficace à l'égard des chocs. Dans cette version, la paroi en matière plastique rigide présente de préférence une surface convexe orientée dans une direction opposée à celle de la paroi en matière plastique souple. Cette disposition permet d'augmenter le volume de chacune des zones définies entre les deux parois du panneau et de ce fait la protection de celui-ci à l'égard des chocs.

De préférence également, la face de la paroi en matière plastique rigide opposée à celle recouverte par la paroi en matière souple comporte des nervures de renforcement. Ces nervures qui s'étendent depuis la face interne de la paroi rigide jusqu'à proximité de la tôle augmentent la rigidité de la paroi en matière plastique rigide.

Selon un autre aspect, l'invention concerne également un véhicule automobile comportant au moins un panneau de protection selon l'invention fixé sur une partie de sa carrosserie qui est exposée à des chocs.

De préférence, ledit panneau de protection est fixé sur une partie de la carrosserie qui comporte au moins un ajour. Cet ajour permet d'alléger la partie de la carrosserie sur laquelle le panneau de protection est fixé.

Dans une version préférée de l'invention, ledit panneau de protection est fixé sur chacune des portes latérales du véhicule. Ce panneau de protection peut également être fixé sur l'avant et/ou l'arrière du véhicule.

Selon une autre forme de réalisation, la partie de carrosserie sur laquelle le panneau est fixé est pleine et un jeu suffisant est ménagé entre ladite partie pleine et la paroi rigide du panneau pour permettre la circulation de l'air par l'évent et éviter des bruits de sifflements.

La présente invention concerne également un procédé de fabrication d'un panneau de protection présentant les caractéristiques de la revendication 6.

Selon une forme de réalisation préférée du procédé, la paroi rigide est également moulée de manière à présenter des surfaces convexes qui en regard des surfaces convexes de la paroi souple sont orientées en direction opposée à celle de la paroi en matière plastique souple.

Dans une variante, la liaison étanche entre la paroi rigide et la paroi souple est obtenue par un cordon de collage présentant une largeur comprise entre 5 et 10 mm.

Dans une variante, lors du moulage de la paroi rigide, on ménage un évent dans ladite paroi au niveau de l'emplacement correspondant à une cellule.

De manière avantageuse, la paroi souple est assemblée sur toute la zone périphérique à la paroi rigide à l'aide d'une liaison réalisée par procédé de soudage laser.

De préférence, on réalise également un soudage laser pour assembler les parois souple et rigide dans les zones où elles sont en contact selon des lignes de soudage.

De manière à favoriser le soudage au laser, les deux parois sont plaquées l'une contre l'autre avec un serrage suffisant dans la zone de soudage. De préférence, on applique une pression locale comprise entre 0,5 et 40 bars et ce, au plus près de la ligne de soudage.

La matière plastique souple servant à réaliser la paroi souple du panneau est à l'extérieur et est choisie opaque. Le support rigide est réalisé dans une matière transparente au faisceau laser permettant au faisceau laser de la traverser jusqu'à la matière opaque.

Ainsi, une fois la matière plastique transparente traversée, le faisceau laser arrive au contact de la matière opaque de la paroi souple et provoque un échauffement local de ladite matière du panneau souple. Le placage sous pression des deux parois permet une transmission de la chaleur à la paroi rigide et lors du refroidissement intervenant après le passage du faisceau, les deux matières ont été fixées.

Ainsi, la matière plastique souple doit présenter une transmission du faisceau laser nulle, elle doit donc être totalement opaque. En effet, si une transmission survenait une partie de l'énergie apportée par le laser traverserait la peau souple ou échaufferait celle-ci à coeur et non uniquement en surface, ce qui perturberait la qualité de la liaison obtenue entre la paroi souple et la paroi rigide.

On choisit de préférence une matière plastique souple dont la transmission est comprise dans la plage de 0 à 10%. De manière à assurer cette opacité, la matière souple peut contenir des additifs-laser (dioxyde d'antimoine, noir de carbone, etc ...)

Cette matière souple est de préférence choisie parmi un polyuréthane thermoplastique (TPU) aromatique pour les teintes foncées, un TPU aliphatiques pour toutes les autres teintes, un polychlorure de vinyle (PVC) souple ou semi-rigide un copolymère SEBS (styrène-ethylène-butylène-styrène), un silicone (SIK).

Ces matières présentent en outre l'avantage de présenter un toucher souple et agréable comme à l'intérieur des véhicules, une impression de protection (effet amortisseur caoutchouc), une bonne résistance aux rayures, une matière auto-cicatrisante, un effet de protection du véhicule par absorption d'énergie, un aspect extérieur mat possible. De plus, si on choisit une teinte différente de celle de la carrosserie du véhicule sur lequel le panneau doit être fixé, on peut obtenir un effet visuel bi-ton.

Par ailleurs, la matière plastique constituant la paroi souple doit également présenter des caractéristiques physiques telles qu'une résistance à la rayure, une nettoyabilité, une résistance aux UV, une résistance mécanique dans une plage de température allant de -30°C à +85°C.

La matière plastique pour constituer la paroi rigide doit être compatible avec la matière de la paroi souple pour rendre possible un soudage au laser. Elle est choisie parmi le polypropylène (PP), l'acrylonitrile butadiène styrène (ABS), un alliage de Polycarbonate (PC)/ABS.

La matière plastique pour la paroi rigide doit également posséder de bonnes caractéristiques mécaniques, notamment une résistance au chocs y compris à basse température, une résistance en température (module de Young et résistance à la traction) à 85°C, un faible coefficient de dilatation afin de garantir les jeux et affleurements ainsi qu'une bonne injectabilité.

D'autres particularités et avantages de l'invention apparaîtront encore tout au long de la description ci-après.

Aux dessins annexés, donnés à titre d'exemples, non limitatifs :
- la figure 1 représente schématiquement une vue en coupe d'une cellule d'un panneau selon l'invention ;
- la figure 2 représente une vue en plan côté partie rigide d'un panneau de protection selon l'invention,
- la figure 3 est une vue en coupe de la figure 1 selon la ligne A-A ; et,
- la figure 4 représente schématiquement le procédé de soudage laser.

Un panneau de protection en matière plastique 1 selon l'invention est fixé sur une tôle 2 de porte latérale d'un véhicule automobile.

Ce panneau de protection 1 comprend une paroi intérieure 3 en matière plastique rigide destinée à venir contre la tôle 2 et une paroi extérieure 4 en matière plastique souple destinée à être tournée vers l'extérieur du véhicule.

Ces deux parois 3, 4 sont en contact l'une avec l'autre dans des zones 5 qui entourent des zones 7 dans lesquelles ces deux parois 3, 4 sont espacées l'une de l'autre, lesdites zones 7 étant remplies d'air. Pour former cet espace, la paroi extérieure souple présente une forme bombée convexe, en saillie vers l'extérieur du panneau 1.

Les zones 7 sont délimitées par une liaison étanche 11 des parois 3 et 4 qui sont en contact l'une avec l'autre et définissent ainsi des cellules 7 capables d'amortir de petits chocs urbains. Dans les zones dans lesquelles les deux parois 3, 4 sont donc en contact l'une avec l'autre, ces deux parois 3, 4 sont soudées ou collées l'une à l'autre, au moins par la liaison étanche 11 délimitant la zone 7.

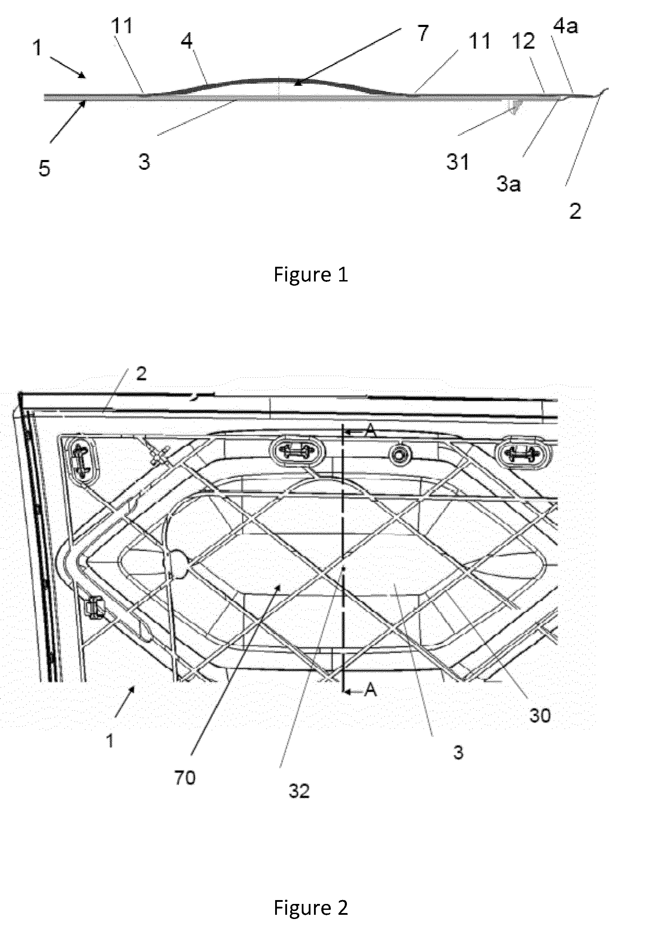

Ces cellules 7 peuvent avoir des formes diverses permettant de définir également un motif esthétique. Dans le cas illustré par la figure 1, les cellules 7 ont une forme de bulle de section circulaire. La paroi en matière plastique souple 4 présente ainsi une forme bombée convexe vers l'extérieur s'écartant de la paroi en matière plastique rigide 3 qui est plane.

La paroi en matière plastique rigide 3 comporte sur sa face intérieure des moyens de fixation, tels que des agrafes 31, pour fixer celle-ci à la peau extérieure 2 de la porte. La paroi 4 en matière souple recouvre la face extérieure de la paroi 3 en matière rigide.

La matière plastique constituant la paroi souple du panneau est choisie de manière à présenter des caractéristiques suffisantes de résistance à la rayure et aux UVs, de nettoyabilité ainsi que de résistance mécanique appropriée dans une plage de températures d'utilisation de -30°C à + 85°C.

La matière plastique constituant la paroi rigide du panneau doit présenter des caractéristiques appropriées de résistance aux chocs y compris à basse température, de résistance mécanique en température à 85°C (module de Young, résistance à la traction). En outre, elle doit présenter un faible coefficient de dilatation afin de garantir les jeux et affleurements ainsi qu'une bonne injectabilité pour sa fabrication.

Ainsi, la paroi 3 en matière plastique rigide peut être en ABS (acrylonitrile, butadiène styrène), PC (polycarbonate), PP (polypropylène) ou analogues. De préférence, on utilise un alliage de PC/ABS avec un pourcentage de PC de l'ordre de 65%, notamment dans le cas d'un assemblage des parois par soudage laser.

La paroi 4 en matière plastique souple peut être en élastomère, tel qu'en polyuréthane thermoplastiques (TPU) aromatiques ou aliphatiques, en silicone (SIK), en polychlorure de vinyle (PVC) ou en élastomères thermoplastiques oléfiniques ou styréniques comme par exemple le SEBS (Styrène Ethylène Butylène Styrène). Les matières plastiques rigide et souple sont choisies de manière à être compatibles en termes de soudage ou de collage.

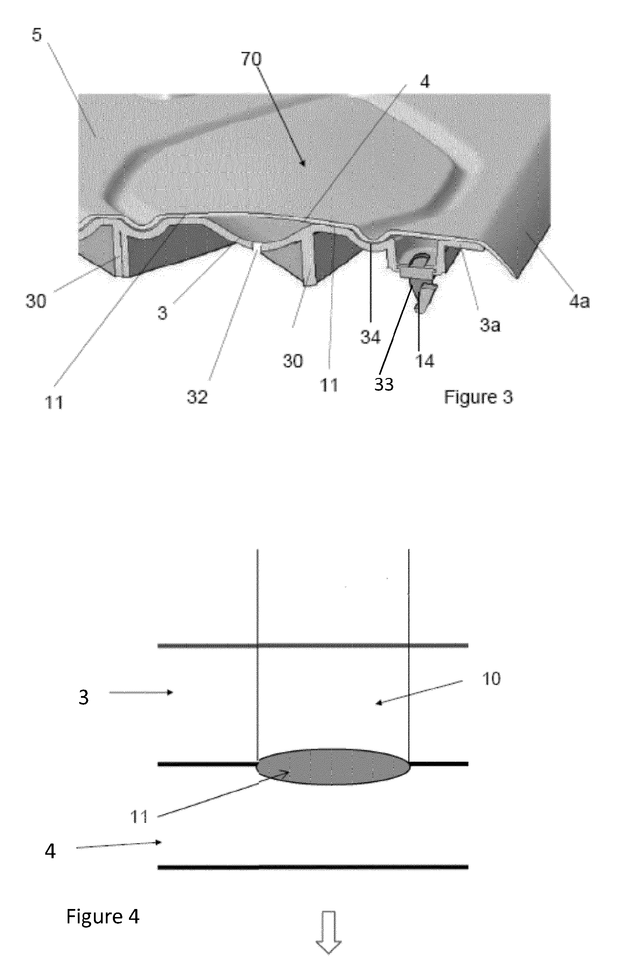

Aux figures 2 et 3, la cellule 70 présente une forme hexagonale formant ainsi une alvéole. Cette forme en alvéole 70 permet une répartition des cellules 70 en nid d'abeille dans le panneau 1 et présente ainsi l'avantage de minimiser la surface des zones de liaison 5 entre les cellules 70. Ainsi, l'essentiel de la surface extérieure du panneau 10 est constituée par des alvéoles 70 capables d'amortir des petits chocs urbains sans endommager ni le panneau 10, ni la porte 2.

Pour qu'une alvéole 70 présente une souplesse / dureté adéquate, on peut jouer sur les caractéristiques suivantes :
- dureté et épaisseur de la matière souple constituant la paroi 4
- forme plus ou moins bombée de la cellule 70
- dépassement en Y du sommet de la cellule 70 par rapport à la zone 5 rigide
- largeur de la cellule 70.

Dans ce dernier cas ce qui compte c'est la plus petite dimension de l'alvéole 70. Que la longueur de l'alvéole 10 soit égale ou supérieure à la largeur ne joue pas.

Dans le cas d'une cellule se présentant sous la forme d'une bulle 7 étanche comme visible à la figure 1, la compression de l'air doit être prise en compte, en plus des caractéristiques de matériau et de géométrie de la cellule 7. Dans ce cas, pour être efficace, il faut que la cellule 7 ait une forme aussi arrondie que possible (forme de ballon). Une bulle ovale assez plate se caractérise par peu d'élévation de pression en cas de déformation.

Comme montré sur la figure 1 et 3, le bord périphérique 4a de la paroi 4 en matière plastique souple déborde par rapport au bord périphérique 3a de la paroi 3 en matière plastique rigide pour constituer une lèvre souple venant en appui sur la peau extérieure de la porte du véhicule, ce qui permet de réaliser l'étanchéité entre le panneau 1 et la porte 2.

De plus, à la périphérie du panneau 1, la paroi 4 en matière plastique souple est soudée ou collée en 12 à la paroi 3 en matière plastique rigide de manière étanche. La figure 3 montre également que, dans la zone dans laquelle les deux parois 3, 4 sont espacées, la paroi 4 en matière plastique souple présente une surface convexe dirigée vers l'extérieur qui fait légèrement saillie par rapport au reste du panneau 1.

Par ailleurs, à la figure 3, dans l'alvéole 7, la paroi 3 en matière plastique rigide présente une surface convexe orientée dans une direction opposée à celle de la paroi 4 en matière plastique souple. De plus, la face intérieure de la paroi 3 en matière plastique rigide qui est opposée à celle recouverte par la paroi 4 en matière souple comporte des nervures de renforcement 30.

Ces nervures de renforcement 30 augmentent la rigidité du panneau et garantissent une résistance suffisante aux efforts externes et aux chocs. Ces nervures 30 s'étendent de la face interne du panneau jusqu'à quelques millimètres de la tôle sur laquelle le panneau est placé. Ainsi, si le panneau a une épaisseur de 2,5 mm, les nervures 30 ont une épaisseur légèrement inférieure à 2,5 mm.

Lorsque la liaison étanche 11 est réalisé à l'aide d'un procédé de soudage tel qu'un soudage laser, les nervures 30 ne sont pas présentes dans les zones de soudage. En effet, lors d'un tel soudage, le rayon laser doit traverser une paroi d'épaisseur constante, afin de garantir une soudure homogène. La présence d'une nervure 30 provoquerait une modification de la transparence et ainsi de la température de soudage, aussi prévoit-on de laisser libre la zone de soudage laser. Toutefois pour que cette interruption de nervure ne provoque pas d'affaiblissement du panneau, on réalise des cuvettes 34 sur le panneau rigide, notamment dans les zones des cellules 70. Ces cuvettes 34 rigidifient localement le panneau 3.

Selon un mode de réalisation préféré de l'invention, une nervure périphérique 33 est prévue à proximité du bord de l'ajourage de la porte et sert de support à un joint d'étanchéité 14 qui se place sur le sommet de la nervure 33.

Ainsi, après montage du panneau 10 sur une porte ajourée, le joint périphérique 14 est en contact avec la tôle 2 et assure une étanchéité complémentaire tout autour de l'ajour du panneau de porte.

Dans une telle répartition des zones 70, il n'existe pas de lignes de liaison droites dans le sens de la longueur ou de la hauteur du panneau 1 susceptibles de constituer des lignes de flexion du panneau 1, 10.

Conformément à l'invention, sur les figures 2 et 3, chaque alvéole 70 comporte un évent 32 ménagé dans la paroi rigide 3.

L'évent 32 est ménagé dans la paroi rigide 3 au niveau de chaque cellule 70, cet évent 32 étant dimensionné pour ne pas laisser s'échapper de l'air en cas de choc ou d'effort rapide sur la cellule 70 tout en permettant un échappement et une entrée d'air lors de variation de pression interne dans la cellule 70 sous l'effet de variations thermiques.

Ainsi, l'évent 32 permet de réguler la montée en pression de l'air au sein de la cellule 70 sous l'effet d'une augmentation de la température, lorsque le véhicule reste au soleil et lors d'une baisse notamment liée au froid.

Lors d'une élévation de température, une surpression survient au sein de cette cellule 70 et entraîne un très fort risque de rupture de l'étanchéité de la liaison 11 entre les parois rigide 3 et souple 4. La présence de l'évent 32 permet à l'air de s'échapper pour maintenir une pression adaptée dans la cellule 70.

Lors de la baisse de température, on évite également une dépression dans la cellule 70 pouvant conduire à une déformation de cette cellule 70. La dépression pouvant intervenir au sein de la cellule 70 est alors compensée par l'entrée d'air par l'évent 32.

On décrira maintenant l'invention plus en détail en référence la réalisation d'un panneau selon l'invention avec un soudage laser.

La liaison étanche 7 étant réalisée à l'aide d'un soudage laser, les nervures 30 ne sont pas présentes dans les zones de soudage. En effet, lors d'un tel soudage, comme illustré figure 4, le rayon laser 10 doit traverser une paroi d'épaisseur constante, afin de garantir une soudure homogène. La présence d'une nervure 30 provoquerait une modification de la transparence et ainsi de la température de soudage, aussi prévoit-on de laisser libre la zone de soudage laser.

La matière plastique rigide est telle que de l'acrylonitrile butadiène styrène (ABS) chimiquement compatible avec le TPU de la paroi souple ou encore de manière préférée un alliage de PC(polycarbonate)/ABS présentant un pourcentage de PC de l'ordre de 65%..

Une fois, les parois 3, 4 reposant l'une sur l'autre, les zones bombées de chaque paroi en regard l'une l'autre, on réalise la liaison étanche 7 par un soudage au laser.

Ainsi, l'ABS choisi présente une transmission de 100% du faisceau laser tandis que le TPU est opaque vis-à-vis du laser. A l'interface entre les deux matières, il se crée un échauffement qui génère une liaison mécanique des deux matières. Cette liaison 7 est étanche.

De préférence, la température de soudage est choisie dans une plage de 200 à 300°C, la vitesse de soudage est choisie dans une plage de 10 à 50 mm / sec pour une puissance laser comprise entre 60 et 300 W.

On utilise un laser à diodes 10 dont la longueur d'onde est de 800 à 1000 nm, le contrôle de température s'effectuant en boucle fermée, la puissance délivrée étant ainsi asservie. De préférence, la largeur de cordon de soudage est comprise entre 3 et 15 mm.

La matière plastique souple servant à réaliser la paroi souple 4 du panneau est à l'extérieur et est choisie opaque. Le support ou paroi rigide 3 est réalisé dans une matière transparente permettant au faisceau laser 10 de la traverser jusqu'à la matière opaque. Ainsi, l'ABS choisi présente une transmission de 100% du faisceau laser tandis que le TPU est opaque vis-à-vis du laser. A l'interface entre les deux matières, il se crée un échauffement qui génère une liaison mécanique des deux matières. Cette liaison est étanche.

Ainsi, une fois la matière plastique transparente 3 traversée, le faisceau laser 10 arrive au contact de la matière opaque de la paroi souple 4 et provoque un échauffement local 11 de ladite matière du panneau souple 4. Le placage sous pression des deux parois 3, 4 permet une transmission de la chaleur à la paroi rigide et lors du refroidissement intervenant après le passage du faisceau 10, les deux matières ont été fixées.

Ainsi, la matière plastique souple 4 doit présenter une transmission du faisceau laser nulle, elle doit donc être totalement opaque. En effet, si une transmission survenait une partie de l'énergie apportée par le laser 10, traverserait la paroi souple 4 ou échaufferait celle-ci à coeur et non uniquement en surface, ce qui perturberait la qualité de la liaison étanche obtenue entre la paroi souple 4 et la paroi rigide 3.

## Revendications

1. Panneau de protection (1, 10) en matière plastique destiné à être fixé sur une partie de la carrosserie d'un véhicule automobile, comprenant une paroi en matière plastique rigide (3) et une paroi en matière plastique souple (4), ces deux parois (3, 4) étant en contact l'une avec l'autre dans des zones (5) qui entourent au moins une zone dans laquelle ces deux parois (3, 4) sont espacées l'une de l'autre, **caractérisé en ce que** chaque zone dans laquelle les parois sont espacées définit une cellule (7, 70) délimitée par une liaison étanche (11) entre la paroi souple (4) et la paroi rigide (3) et remplie d'air, la liaison étanche (11) étant réalisée soit par soudage soit par collage de manière à présenter une résistance mécanique supérieure à la contrainte mécanique provoquée par l'augmentation de la pression dans la cellule (7) lors d'un impact et **en ce qu'**un évent (32) est ménagé dans la paroi rigide (3) au niveau de chaque cellule (70), cet évent (32) étant dimensionné pour ne pas laisser s'échapper de l'air en cas de choc ou d'effort rapide sur la cellule (70) tout en permettant un échappement et une entrée d'air lors de variation de pression interne dans la cellule (70) sous l'effet de variations thermiques.

2. Panneau de protection selon la revendication 1, **caractérisé en ce que**, dans les zones (5, 6) dans lesquelles les deux parois (3, 4) sont en contact l'une avec l'autre, ces deux parois (3, 4) sont soudées ou collées l'une à l'autre.

3. Panneau de protection (1, 10) selon l'une des revendications 1 à 2, **caractérisé en ce que** le bord périphérique de la paroi en matière plastique souple (4) déborde par rapport au bord périphérique de la paroi en matière plastique rigide (3) pour constituer une lèvre souple destinée à venir en appui sur ladite partie de la carrosserie du véhicule.

4. Panneau de protection selon l'une des revendications 1 à 3, **caractérisé en ce que** la face de la paroi en matière plastique rigide (3) opposée à celle recouverte par la paroi en matière souple (4) comporte des nervures de renforcement (10).

5. Panneau selon l'une quelconque des revendications précédentes, **caractérisé en ce que** la matière plastique souple (3) présente une transmission comprise dans la plage de 0 à 10%.

6. Procédé de fabrication d'un panneau de protection en matière plastique destiné à être fixé sur une partie de la carrosserie d'un véhicule automobile, comprenant une paroi en matière plastique rigide (2) et une paroi en matière plastique souple (3), ces deux parois étant en contact l'une avec l'autre dans des zones qui entourent des zones dans lesquelles ces deux parois sont espacées l'une de l'autre, selon l'une des revendications 1 à 5 comprenant les étapes consistant à réaliser par moulage les deux parois, l'une en une première matière plastique pour former la paroi rigide (2) et l'autre en une deuxième matière plastique pour former la paroi souple (3), puis à appliquer la paroi souple (3) contre la paroi rigide (2) de sorte que ces deux parois (2, 3) soient en contact l'une avec l'autre dans les zones entourant des zones dans lesquelles elles sont espacées, lesdites zones définissant une cellule (5) remplie d'air délimitée par une liaison étanche (7) réalisée par une ligne de soudage laser ou par un cordon de collage.

7. Procédé selon la revendication 6, dans lequel la liaison étanche (7) est obtenue par collage, **caractérisé en ce que** de plus des cordons de collage sont déposés à intervalles réguliers dans les zones en contact pour les maintenir assemblées et qu'un cordon de collage est également déposé à la périphérie des parois.

8. Procédé selon la revendication 6, dans lequel la liaison étanche (7) est obtenue par une ligne de soudage laser **caractérisé en ce que** la matière plastique souple est opaque et la matière plastique rigide est transparente, le faisceau laser traversant la matière rigide transparente jusqu'à la matière souple opaque et provoquant un échauffement local de ladite matière opaque, tandis qu'un placage sous pression des deux parois (2, 3) permet une transmission de la chaleur à la paroi rigide (2) et lors du refroidissement intervenant après le passage du faisceau, les deux matières sont fixées.

9. Procédé selon la revendication 6, dans lequel la liaison étanche (7) est obtenue par une ligne de soudage laser ou selon la revendication 8 avec une largeur de cordon de soudage de la liaison mécanique étanche est comprise entre 3 et 15 mm.

10. Procédé selon la revendication 6, dans lequel la liaison étanche (7), est obtenue par une ligne de soudage laser ou selon l'une quelconque des revendications 8 à 9, **caractérisé en ce qu'**on réalise un soudage laser pour assembler les parois souple (3) et rigide (2) dans les zones où elles sont en contact selon des lignes de soudage.

11. Procédé selon la revendication 6, dans lequel la liaison étanche (7) est obtenue par une ligne de soudage laser ou selon l'une des revendications 8 à 10 **caractérisé en ce que** les deux parois (2, 3) sont plaquées l'une contre l'autre avec un serrage suffisant dans la zone de soudage, de préférence, on applique une pression locale comprise entre 0,5 et 40 bars et ce, au plus près de la ligne de soudage.

12. Procédé selon la revendication 6, dans lequel la liaison étanche (7) est obtenue par une ligne de soudage laser ou selon l'une des revendications 8 à 11, **caractérisé en ce que** la température de soudage est choisie dans une plage de 200 à 300°C, la vitesse de soudage est choisie dans une plage de 10 à 50 mm / sec pour une puissance laser comprise entre 60 et 300 W, le laser à diodes (10) utilisé présentant une longueur d'onde de 800 à 1000 nm.

13. Procédé selon la revendication 12, **caractérisé en ce que** le contrôle de température s'effectue en boucle fermée, la puissance délivrée étant ainsi asservie.

14. Véhicule automobile comportant au moins un panneau de protection (1, 14, 15) selon l'une des revendications 1 à 5 fixé sur une partie (2) de sa carrosserie qui est exposée à des chocs.

## Patentansprüche

1. Schutzplatte (1, 10) aus Kunststoffmaterial, die dazu bestimmt ist, auf einem Teil der Karosserie eines Kraftfahrzeugs befestigt zu werden, eine Wand aus steifem Kunststoff (3) und eine Wand aus weichem Kunststoff (4) umfassend, wobei diese beiden Wände (3, 4) in Zonen (5) miteinander in Kontakt stehen, die zumindest eine Zone umgeben, in der sich diese beiden Wände (3, 4) im Abstand zueinander befinden, **dadurch gekennzeichnet, dass** jede Zone, in der sich die Wände im Abstand befinden, eine Zelle (7, 70) definiert, die durch eine dichte Verbindung (11) zwischen der weichen Wand (4) und der steifen Wand (3) eingegrenzt, und mit Luft gefüllt ist, wobei die dichte Verbindung (11) entweder durch Schweißen oder durch Kleben erzeugt wird, um eine mechanische Festigkeit größer als die mechanische Belastung aufzuweisen, die durch die Erhöhung des Drucks in der Zelle (7) bei einem Aufprall hervorgerufen wird, und dadurch, dass ein Luftloch (32) in der steifen Wand (3) im Bereich einer jeden Zelle (70) angeordnet ist, wobei dieses Luftloch (32) bemessen ist, um bei einem Stoß oder einer raschen Beanspruchung der Zelle (70) keine Luft entweichen zu lassen, jedoch ein Entweichen und einen Eintritt von Luft bei internen Druckschwankungen in der Zelle (70) unter dem Einfluss von Temperaturschwankungen zu ermöglichen.

2. Schutzplatte nach Anspruch 1, **dadurch gekennzeichnet, dass** diese beiden Wände (3, 4) in den Zonen (5, 6), in denen die beiden Wände (3, 4) miteinander in Kontakt stehen, miteinander verschweißt oder verklebt sind.

3. Schutzplatte (1, 10) nach einem der Ansprüche 1 bis 2, **dadurch gekennzeichnet, dass** der umlaufende Rand der Wand aus weichem Kunststoff (4) im Verhältnis zum umlaufenden Rand der Wand aus steifem Kunststoff (3) hinausragt, um eine weiche Lippe zu bilden, die dazu bestimmt ist, sich an den besagten Teil der Karosserie des Fahrzeugs anzulegen.

4. Schutzplatte nach einem der Ansprüche 1 bis 3, **dadurch gekennzeichnet, dass** die Seite der Wand aus steifem Kunststoff (3), die von jener abgewandt ist, die mit der Wand aus weichem Material (4) bedeckt ist, Versteifungsrippen (10) umfasst.

5. Platte nach irgendeinem der vorherigen Ansprüche, **dadurch gekennzeichnet, dass** das weiche Kunststoffmaterial (3) eine Übertragung in einem Bereich zwischen 0 und 10% aufweist.

6. Verfahren zur Herstellung einer Schutzplatte aus Kunststoffmaterial, die dazu bestimmt ist, auf einem Teil der Karosserie eines Kraftfahrzeugs befestigt zu werden, eine Wand aus steifem Kunststoffmaterial (2) und eine Wand aus weichem Kunststoffmaterial (3) umfassend, wobei diese beiden Wände in Zonen miteinander in Kontakt stehen, die zumindest eine Zone umgeben, in der sich diese beiden Wände im Abstand zueinander befinden, nach einem der Ansprüche 1 bis 5, die Schritte umfassend, die darin bestehen, die beiden Wände durch Formguss herzustellen, die eine aus einem ersten Kunststoffmaterial zum Bilden der steifen Wand (2) und die andere aus einem zweiten Kunststoffmaterial zum Bilden der weichen Wand (3), und danach die weiche Wand (3) an der steifen Wand (2) anzulegen, sodass die beiden Wände (2, 3) in den Zonen miteinander in Kontakt stehen, die Zonen umgeben, in denen sie sich im Abstand befinden, wobei die besagten Zonen eine mit Luft gefüllte Zelle (5) definieren, die durch eine dichte Verbindung (7) eingegrenzt wird, die durch eine Laserschweißnaht oder durch eine Kleberaupe erzeugt wird.

7. Verfahren nach Anspruch 6, wobei man die dichte Verbindung (7) durch Verkleben erhält, **dadurch gekennzeichnet, dass** außerdem Kleberaupen in regelmäßigen Intervallen in den in Kontakt befindlichen Zonen angebracht werden, um sie zusammen zu halten, und dass eine Kleberaupe auch am Umfang der Wände angebracht wird.

8. Verfahren nach Anspruch 6, wobei man die dichte Verbindung (7) durch eine Laserschweißnaht erhält, **dadurch gekennzeichnet, dass** das weiche Kunststoffmaterial opak ist und das steife Kunststoffmaterial transparent ist, wobei der Laserstrahl das transparente steife Material bis zum opaken weichen Material durchquert und eine lokale Erwärmung des besagten opaken Materials bewirkt, während eine Plattierung der beiden Wände (2, 3) unter Druck eine Übertagung der Wärme auf die steife Wand (2) ermöglicht, und die beiden Materialien beim Abkühlen, das nach dem Durchgang des Strahls erfolgt, befestigt sind.

9. Verfahren nach Anspruch 6, wobei man die dichte Verbindung (7) durch eine Laserschweißnaht oder nach Anspruch 8 erhält, mit einer Schweißnahtbreite der dichten mechanischen Verbindung zwischen 3 und 15 mm.

10. Verfahren nach Anspruch 6, wobei man die dichte Verbindung (7) durch eine Laserschweißnaht oder nach irgendeinem der Ansprüche 8 bis 9 erhält, **dadurch gekennzeichnet, dass** man eine Laserschweißung durchführt, um die weiche (3) und steife (2) Wand in den Zonen zusammenzufügen, wo sie entlang der Schweißnähte in Kontakt sind.

11. Verfahren nach Anspruch 6, wobei man die dichte Verbindung (7) durch eine Laserschweißnaht oder nach irgendeinem der Ansprüche 8 bis 10 erhält, **dadurch gekennzeichnet, dass** die beiden Wände (2, 3) in der Schweißzone mit einer ausreichenden Klemmung aneinander gedrückt werden, und man vorzugsweise einen lokalen Druck zwischen 0,5 und 40 bar möglichst nahe an der Schweißnaht anlegt.

12. Verfahren nach Anspruch 6, wobei man die dichte Verbindung (7) durch eine Laserschweißnaht oder nach irgendeinem der Ansprüche 8 bis 11 erhält, **dadurch gekennzeichnet, dass** die Schweißtemperatur aus einem Bereich zwischen 200 und 300°C ausgewählt wird, die Schweißgeschwindigkeit aus einem Bereich zwischen 10 und 50 mm/Sek. bei einer Laserleistung zwischen 60 und 300 W ausgewählt wird, wobei der verwendete Diodenlaser (10) eine Wellenlänge von 800 bis 1000 nm aufweist.

13. Verfahren nach Anspruch 12, **dadurch gekennzeichnet, dass** die Temperaturkontrolle in einer geschlossenen Schleife erfolgt, wobei die abgegebene Leistung so angesteuert wird.

14. Kraftfahrzeug, zumindest eine Schutzplatte (1, 14, 15) nach einem der Ansprüche 1 bis 5 umfassend, die auf einem Teil (2) seiner Karosserie befestigt ist, die Stößen ausgesetzt ist.

## Claims

1. Protective panel (1, 10) made from plastics material, intended to be fixed to a part of the bodywork of a motor vehicle, comprising a wall made from rigid plastics material (3) and a wall made from flexible plastics material (4), these two walls (3, 4) being in contact with each other in zones (5) that surround at least one zone in which these two walls (3, 4) are spaced apart from each other, **characterised in that** each zone in which the walls are spaced apart defines a cell (7, 70) delimited by a impervious connection (11) between the flexible wall (4) and the rigid wall (3) and filled with air, the impervious connection (11) being produced either by welding or by adhesive bonding so as to have a mechanical strength greater than the mechanical stress caused by the increase in the pressure in the cell (7) during an impact, and **in that** a vent (32) is provided in the rigid wall (3) at each cell (70), this vent (32) being sized so as not to allow air to escape in the event of impact or rapid force on the cell (70) while allowing escape and entry of air during a variation in internal pressure in the cell (70) under the effect of thermal variations.

2. Protective panel according to claim 1, **characterised in that**, in the zones (5, 6) in which the two walls (3, 4) are in contact with each other, these two walls (3, 4) are welded or adhesively bonded to each other.

3. Protective panel (1, 10) according to one of claims 1 to 2, **characterised in that** the peripheral edge of the wall made from flexible plastics material (4) projects with respect to the peripheral edge of the wall made from rigid plastics material (3) in order to form a flexible lip intended to come into abutment on said part of the bodywork of the vehicle.

4. Protective panel according to one of claims 1 to 3, **characterised in that** the face of the wall made from rigid plastics material (3) opposite to the one covered by the wall made from flexible material (4) comprises reinforcement ribs (10).

5. Panel according to any one of the preceding claims, **characterised in that** the flexible plastics material (3) has a transmission in the range from 0 to 10%.

6. Method for manufacturing a protective panel made from plastics material intended to be fixed to a part of the bodywork of a motor vehicle, comprising a wall made from rigid plastics material (2) and a wall made from flexible plastics material (3), these two walls being in contact with each other in zones that surround zones in which these two walls are spaced apart from each other, according to one of claims 1 to 5, comprising the steps consisting of producing the two walls by moulding, one from a first plastics material in order to form the rigid wall (2) and the other from a second plastics material in order to form the flexible wall (3), and then applying the flexible wall (3) against the rigid wall (2) so that these two walls (2, 3) are in contact with each other in the zones surrounding zones in which they are spaced apart, said zones defining a cell (5) filled with air, delimited by a impervious connection (7) produced by a laser welding line or by an adhesive-bonding bead.

7. Method according to claim 6, in which the impervious connection (7) is obtained by adhesive bonding, **characterised in that** in addition adhesive bonding beads are deposited at regular intervals in the zones in contact in order to keep them assembled and **in that** an adhesive bonding bead is also deposited at the periphery of the walls.

8. Method according to claim 6, in which the impervious connection (7) is obtained by a laser welding line, **characterised in that** the flexible plastics material is opaque and the rigid plastics material is transparent, the laser beam passing through the transparent rigid material as far as the opaque flexible material and causing a local heating of said opaque material, while a pressurised pressing of the two walls (2, 3) allows a transmission of the heat to the rigid wall (2) and, during the cooling occurring after the passage of the beam, the two materials are fixed.

9. Method according to claim 6, in which the impervious connection (7) is obtained by a laser welding line or according to claim 8 with a welding bead width of the impervious mechanical connection is between 3 and 15 mm.

10. Method according to claim 6, in which the impervious connection (7) is obtained by a laser welding line or according to any one of claims 8 to 9, **characterised in that** laser welding is carried out in order to assemble the flexible (3) and rigid (2) walls in the zones where they are in contact along welding lines.

11. Method according to claim 6, in which the impervious connection (7) is obtained by a laser welding line or according to one of claims 8 to 10, **characterised in that** the two walls (2, 3) are pressed against each other with sufficient clamping in the welding zone, preferably, a local pressure of between 0.5 and 40 bar is applied as close as possible to the welding line.

12. Method according to claim 6, in which the impervious connection (7) is obtained by a laser welding line or according to one of claims 8 to 11, **characterised in that** the welding temperature is chosen in a range from 200° to 300°C, the welding speed is chosen in a range from 10 to 50 mm/dry for a laser power of between 60 and 300 W, the diode laser (10) used having a wavelength of 800 to 1000 nm.

13. Method according to claim 12, **characterised in that** the temperature is controlled in closed loop, the power delivered thus being slaved.

14. Motor vehicle comprising at least one protective panel (1, 14, 15) according to one of claims 1 to 5 fixed to a part (2) of its bodywork that is exposed to impacts.
